# FASCICULE DE BREVET EUROPEEN

(11) **EP 3 453 572 B1**
(45) Date de publication et mention de la délivrance du brevet: **22.01.2020**
(21) Numéro de dépôt: 18186482.8
(22) Date de dépôt: 31.07.2018
(51) Int. Cl.: B60R 1/02, B60R 1/072

(54) **RÉTROVISEUR POUR VÉHICULE AUTOMOBILE**
RÜCKSPIEGEL FÜR EIN KRAFTFAHRZEUG
REARVIEW MIRROR FOR A MOTOR VEHICLE

(30) Priorité: 08.09.2017 FR 1758282
(43) Date de publication de la demande: 13.03.2019
(73) Titulaire: RENAULT s.a.s., 92100 Boulogne-Billancourt (FR)
(72) Inventeur: LASSAGNE, Antoine, 78350 Montesson (FR); REGNIER, Stéphane, 91370 Verrières le Buisson (FR)

(56) Documents cités:
- US-A1- 2002 015 241
- US-A1- 2012 099 173

## Description

L'invention a pour objet les rétroviseurs de véhicules automobiles. Un véhicule automobile peut être typiquement équipé d'un rétroviseur central, situé à l'intérieur de l'habitacle du véhicule, par exemple fixé au niveau du pare-brise avant du véhicule. Le plus souvent, le véhicule comporte également au moins un rétroviseur extérieur situé du côté du conducteur, permettant au conducteur de regarder vers l'arrière du véhicule, dans une direction généralement plus écartée de la trajectoire du véhicule que le permet le rétroviseur central.

Usuellement le véhicule est également équipé d'un rétroviseur extérieur situé du côté passager, et permettant au conducteur de regarder vers l'arrière du véhicule dans une direction écartée de la trajectoire du véhicule, direction qui peut être symétrique, ou le plus souvent dissymétrique du fait des réglages des rétroviseurs, par rapport à la direction de vision permise par le rétroviseur côté conducteur.

Le rétroviseur central est monté sur un support qui permet d'ajuster cette direction manuellement en fonction de l'évolution des besoins du conducteur, et en cas de changement de conducteur.

En prévision d'une conduite de nuit, ce rétroviseur central est souvent muni d'un réglage rapide, modifiant l'angle d'inclinaison par rapport à l'horizontale pour éviter au conducteur d'être ébloui en cas d'éclairage à forte luminosité du rétroviseur par l'arrière du véhicule. Les rétroviseurs extérieurs ne sont pas équipés de dispositifs d'adaptation rapide aux conditions de roulage du véhicule.

Un rétroviseur extérieur peut parfois comporter deux zones réfléchissantes, dont souvent une zone réfléchissante rapportée, les normales à une portion centrale de chacune de ces surfaces réfléchissantes étant dirigées suivant deux directions différentes, de manière à permettre au conducteur de surveiller l'arrière du véhicule suivant deux angles solides d'observation, centrés sur des directions d'observation distinctes. Usuellement, ces deux zones réfléchissantes sont solidaires l'une de l'autre, et ne peuvent donc être orientées indépendamment l'une de l'autre.

Dans certains dispositifs rétroviseurs, comme dans le rétroviseur décrit dans le document US9296338, l'inclinaison de la surface réfléchissante du rétroviseur peut être pilotée pour être automatiquement ajustée, en fonction par exemple des données issues d'une caméra surveillant la position d'une remorque entrainée par le véhicule.

Si l'on applique ce mode de pilotage automatique à un rétroviseur comportant plusieurs facettes réfléchissantes conçues pour regarder simultanément dans des directions différentes, l'optimisation de l'orientation d'une des facettes réfléchissante peut dégrader la pertinence de l'orientation d'une autre facette, par rapport aux besoins instantanés du conducteur.

Pour résoudre cet inconvénient, il a été proposé d'ajuster automatiquement des directions de réflexion de plusieurs surfaces réfléchissantes se déplaçant alors de manière indépendante. On obtient alors un miroir mobile à multiples facettes. L'interprétation de l'image réfléchie résultante peut être malaisée pour le conducteur, qui peut en outre être gêné par les zones frontières et par d'éventuels recouvrements entre les différentes facettes.

Le document US 2002/015241 divulgue un dispositif rétroviseur pour véhicule, comprenant un dispositif miroir conçu pour permettre au conducteur du véhicule de regarder, par réflexion, dans au moins une direction dirigée vers l'arrière et l'extérieur du véhicule, un support, configuré pour fixer le dispositif miroir à une structure de caisse du véhicule selon le préambule de la revendication 1.

L'invention a pour but de remédier à ces inconvénients. A cette fin il est proposé un dispositif rétroviseur pour véhicule, comprenant
- Un dispositif miroir conçu pour permettre au conducteur du véhicule de regarder, par réflexion, dans au moins une direction dirigée vers l'arrière et l'extérieur du véhicule,
- Un support, de préférence articulé, configuré pour fixer le dispositif miroir à une structure de caisse du véhicule, -Avantageusement, le support est configuré pour permettre d'orienter de manière variable, le dispositif miroir par rapport au véhicule, par exemple en fonction des besoins du conducteur-.

Le dispositif miroir comporte au moins une première portion de surface réfléchissante, et comporte une deuxième portion de surface réfléchissante orientable par rapport à la première portion de surface réfléchissante. La première et la deuxième portion de surface réfléchissante sont configurées pour permettre au conducteur du véhicule de regarder, par réflexion respectivement sur la première portion de surface réfléchissante et sur la deuxième portion de surface réfléchissante, respectivement dans une première direction par rapport au véhicule, et dans une deuxième direction orientable par rapport à la première direction.

La première portion de surface réfléchissante et la deuxième portion de surface réfléchissante font partie d'une même surface réfléchissante continue.

Par surface réfléchissante continue, on entend une surface géométriquement continue, dont les propriétés réfléchissantes sont continues en tout point de la surface, ne dépendant que de la géométrie imposée à la surface.

Le dispositif miroir comporte avantageusement au moins un premier dispositif d'inclinaison piloté, configuré pour faire varier l'inclinaison de la première surface réfléchissante par rapport à la structure de caisse du véhicule pendant le roulage du véhicule.

Le dispositif miroir peut comporter en outre au moins un deuxième dispositif d'inclinaison piloté, configuré pour faire varier l'inclinaison de la deuxième surface réfléchissante par rapport à la première surface réfléchissante pendant le roulage du véhicule.

Le premier dispositif d'inclinaison piloté et le deuxième dispositif d'inclinaison piloté peuvent être par exemple configurés pour faire varier l'inclinaison de la surface réfléchissante associée, respectivement sur au moins une première plage d'orientations données et sur une deuxième plage d'orientation données, de manière à permettre au conducteur du véhicule de regarder dans une première direction par rapport au véhicule à l'aide de la première portion de surface réfléchissante, et à permettre au conducteur du véhicule de regarder immédiatement, à l'aide de la deuxième portion d'écran, dans une deuxième direction par rapport au véhicule, la première et la deuxième direction par rapport au véhicule étant adaptables pendant le roulage du véhicule, et étant distinctes au moins pour certaines conditions de roulage du véhicule.

Avantageusement la surface réfléchissante comporte en outre une troisième portion de surface réfléchissante, et le dispositif miroir comprend au moins un troisième dispositif d'inclinaison piloté. Le troisième dispositif d'inclinaison piloté est de préférence actionnable indépendamment du premier et du deuxième dispositif d'inclinaison piloté, et est configuré pour faire varier l'inclinaison de la troisième portion de surface réfléchissante par rapport à la première portion de surface réfléchissante et par rapport à la deuxième portion de surface réfléchissante pendant le roulage du véhicule.

Selon un mode de réalisation, le dispositif miroir comprend un groupe de panneaux support, comprenant un panneau central et une suite d'au moins un panneau articulé, ledit panneau articulé ou lesdits panneaux articulés étant reliés chacun par une liaison charnière avec le panneau central, le panneau central et chacun des panneaux articulés étant liés chacun à au moins une parmi les portions de surfaces réfléchissantes, de manière à imposer l'orientation de ladite portion de surface réfléchissante.

Un bord du panneau central peut dans certains cas longer un côté de l'assemblage de panneaux. On désigne néanmoins ici ce panneau comme central car il joue un rôle de référence centrale pour la cinématique du système de panneaux.

Par charnière, ou liaison charnière entre un premier et un deuxième élément, on entend une liaison permettant une rotation relative du deuxième élément par rapport au premier élément (ou réciproquement). Selon un mode de réalisation, les liaisons charnière entre panneaux peuvent être des liaisons pivot, autorisant la rotation uniquement autour d'un axe géométrique dont la position est liée à la fois au premier et au deuxième élément.

Un tel mode de réalisation à liaisons pivots permet de calculer plus aisément la position d'un panneau en particulier en fonction des mouvements imposés à un point particulier du panneau.

Selon un autre mode de réalisation, au moins une des liaisons entre panneau central et panneau articulé est une liaison de type rotule, ou une liaison de type pivot glissant. Ce mode de réalisation permet de piloter les déplacements angulaires à imposer à un panneau articulé voisin du panneau à liaison rotule, en limitant le risque de contraintes de flexion excessives -notamment au niveau de la portion frontière de surface réfléchissant habillant la séparation entre deux panneaux articulés voisins-.

De manière préférentielle, le groupe de panneaux et les mécanismes d'inclinaison pilotés associés sont configurés pour permettre de faire varier la géométrie de la surface réfléchissante continue, entre une configuration sensiblement plane et une configuration de surface concave, dont la concavité est tournée d'un côté réfléchissant et visible de la surface.

Le dispositif rétroviseur peut comprendre une surface réfléchissante flexible, la surface réfléchissante flexible comprenant une première portion s'étendant devant le panneau central, assemblée au panneau central de manière à rester au moins localement parallèle au panneau central, et comprenant au moins une deuxième portion de surface réfléchissante s'étendant devant un panneau articulé, la deuxième portion de surface réfléchissante étant reliée par au moins une glissière à ce panneau articulé, et étant configurée pour coulisser par rapport au panneau articulé le long de cette glissière lorsque le deuxième dispositif d'inclinaison piloté fait varier l'inclinaison entre le panneau central et le panneau articulé.

La surface réfléchissante flexible peut comprendre une troisième portion de surface réfléchissante reliée par au moins une glissière, à au moins un deuxième panneau articulé, le deuxième panneau articulé étant configuré pour être inclinable par rapport au panneau central.

De manière avantageuse, si la charnière est une liaison pivot, la direction de la glissière peut être sensiblement perpendiculaire à l'axe du pivot, par exemple peut être perpendiculaire ou peut former un angle compris entre +-30° par rapport à la direction perpendiculaire.

Un premier et un deuxième panneau articulé voisins peuvent comporter deux glissières dont les directions divergent -à partir du panneau central- par rapport aux directions perpendiculaires aux glissières, de manière à ce que la zone frontière entre les portions de surface réfléchissante ne soit pas soumise à une flexion trop importante lors du repliement de la portion de surface réfléchissante concave.

De manière avantageuse, le panneau articulé comporte au moins deux éléments de glissière parallèles. La charnière peut être placée de manière à occuper, par rapport à une face du panneau soutenant la surface réfléchissante, une position décalée vers l'arrière.

Selon un mode de réalisation, la première portion de surface réfléchissante elle-même peut être maintenue par un système de glissière sur le panneau central, pour se déplacer parallèlement au panneau central. La glissière du panneau central peut par exemple être une glissière linéaire, par exemple une glissière dont la direction est comprise à l'intérieur d'un dièdre dessiné par la direction d'une glissière linéaire d'un premier panneau articulé, et par la direction d'une glissière linéaire d'un deuxième panneau voisin du premier. Par panneau articulé voisin d'un autre panneau articulé, on entend que ces deux panneaux articulés se suivent lorsque l'on liste les panneaux articulés présents autour du panneau central.

Selon encore un autre mode de réalisation, la première portion de surface réfléchissante peut être maintenue contre le panneau central par une glissière "surfacique" autorisant une plage bidirectionnelle de déplacements dans un plan.

Selon encore un autre mode de réalisation, la première portion de surface réfléchissante peut être collée à une portion de surface du panneau central.

Le deuxième panneau articulé peut comporter un bord qui longe un bord du premier panneau articulé.

Le deuxième panneau articulé peut comporter un bord qui longe à la fois un bord du premier panneau articulé et un bord du panneau central.

Le groupe de panneaux peut ainsi former une surface support presque continue, apte à imposer précisément les déformations souhaitées pour la surface réfléchissante continue.

Selon un autre mode de réalisation, l'assemblage de panneaux peut ménager une portion de surface vide de panneau, dans un angle rentrant entre un bord d'un premier panneau articulé et un bord d'un deuxième panneau articulé.

Le dispositif rétroviseur peut comporter un bâti supportant le panneau central et supportant au moins le deuxième dispositif d'inclinaison piloté. De manière préférentielle, le bâti supporte chacun des dispositifs d'inclinaison piloté de chaque panneau articulé. Selon un mode de réalisation, le panneau central peut être fixe par rapport au bâti. Le bâti lui-même peut être orientable, de manière pilotée ou non, par rapport à une structure de caisse du véhicule, par exemple à l'aide d'un dispositif d'inclinaison piloté dédié.

Au moins un des dispositifs d'inclinaison pilotés peut comporter une biellette d'actionnement, une première extrémité de la biellette d'actionnement étant mobile en contact avec le bâti, mue de manière pilotée par rapport au bâti. La première extrémité de la biellette peut être par exemple reliée par un rail au bâti.

Une deuxième extrémité de la biellette peut être reliée au panneau par une liaison de type rotule, de type pivot ou de type pivot glissant.

La première extrémité de la biellette peut être par exemple mue par un moteur le long d'une crémaillère ménagée sur le bâti.

Le système support peut comprendre un bâti supportant les dispositifs d'inclinaison et le système de panneaux. Le dispositif rétroviseur peut comporter un dispositif rotule supportant le bâti, et permettant de modifier globalement l'orientation du dispositif miroir par rapport à la structure du véhicule. -Par "globalement", on entend ici, en conservant l'orientation de la première portion de surface réfléchissante par rapport à l'orientation de la deuxième portion de surface réfléchissante, et, de manière plus générale, indépendamment d'une position relative imposée aux différentes portions de surface réfléchissante les unes par rapport aux autres quand le dispositif miroir comprend plus de deux portions de surfaces réfléchissantes.-

Le bâti peut comporter une base assemblée sur une rotule pour permettre de mouvoir le bâti par rapport à la caisse du véhicule, et peut comporter une suite de pattes s'étendant à partir de la base en direction de chacun des panneaux articulés, éventuellement également en direction du panneau central pour une des pattes.

Le dispositif rétroviseur peut comporter en outre une unité de commande électronique configurée pour commander les dispositifs d'inclinaison pour imposer au moins deux positions géométriques relatives différentes de la deuxième portion de réfléchissante par rapport à la première portion de surface réfléchissante, en fonction d'au moins deux conditions différentes de roulage du véhicule.

Par condition de roulage, on peut par exemple entendre une ou plusieurs parmi les conditions suivantes : une détection du fait que la marche arrière est enclenchée, que le véhicule se déplace suivant une courbe, qu'un clignotant est activé, qu'au moins une roue du véhicule est surélevée, que l'assiette du véhicule est modifiée, qu'une roue du véhicule tourne dans le vide, que le véhicule roule à une vitesse supérieure à un seuil ou au contraire à une vitesse inférieure à un seuil, que le véhicule est en marche arrière, qu'un radar d'angle mort du véhicule est activé, ...

Selon d'autres modes de réalisation qui peuvent se combiner aux précédents, l'unité de commande électronique peut imposer une configuration géométrique de la surface réfléchissante en fonction de l'identité du conducteur, et/ou en fonction de la position du conducteur dans le véhicule.

D'autres détections d'événements peuvent être configurées pour modifier la position des panneaux : le dispositif rétroviseur peut comprendre, ou être relié à, un système de détection de la position du soleil, et/ou un système d'estimation de l'intensité lumineuse renvoyée par le soleil ou par des phares d'autres voiture en direction du conducteur, afin de modifier l'inclinaison des différentes portions de surface réfléchissante de manière à ne pas éblouir le conducteur.

Selon un mode de réalisation, la surface réfléchissante flexible peut être à cette fin partiellement transparente dans des longueurs d'ondes représentées dans certaines lumières de phares de voiture / la lumière solaire, une surface photosensible placée derrière la surface réfléchissante peut permettre de détecter les directions d'incidence de luminosité la plus élevée, et une unité de calcul peut être configurée pour en déduire, en tenant compte de la géométrie à ce moment de la surface réfléchissante, la direction incidente et la direction réfléchie correspondant à cette plus forte luminosité. Les panneaux peuvent être à cette fin conçus pour laisser passer au moins sur un réseau de points, les rayons lumineux ayant traversé la surface réfléchissante.

Selon un autre mode de réalisation le rétroviseur peut être configuré pour s'assombrir localement sur le lieu d'incidence des luminosités fortes, par exemple le rétroviseur comporte une couche de verre électrochrome, ou encore un système à cristaux liquides.

Le dispositif rétroviseur selon l'invention peut être conçu pour qu'une première portion de surface réfléchissant permette au conducteur du véhicule de regarder dans une direction donnée par rapport au véhicule, et qu'une deuxième portion de surface réfléchissante permette à un passager du véhicule assis à côté du conducteur, de regarder sensiblement dans la même direction par rapport au véhicule. Cette direction commune peut être ajustée automatiquement en fonction d'une position détectée des yeux du conducteur, et d'une position détectée des yeux du passager. Cette direction commune peut être ajustée automatiquement en fonction des conditions de roulage détectées pour le véhicule. Ce mode de pilotage de la géométrie du dispositif rétroviseur peut être utilisé par exemple dans le cadre d'une conduite accompagnée ou d'un apprentissage de la conduite.

De manière générale, le dispositif rétroviseur peut être un dispositif rétroviseur extérieur au véhicule, ou peut être un dispositif rétroviseur intérieur au véhicule.

Dans ce cas en particulier, un dispositif rétroviseur à géométrie piloté peut être dédié entièrement au conducteur, tandis qu'un dispositif rétroviseur piloté séparé peut être dédié entièrement au passager.

Avantageusement, les glissières reliant panneaux et surfaces réfléchissantes sont conçues pour maintenir au moins une portion de plan de la surface réfléchissante, à distance constante d'une face du panneau. Cette distance peut être choisir pour maintenir les panneaux légèrement écartés des surfaces réfléchissantes, de manière à ne pas abîmer le revêtement réfléchissant, et/ou de manière à ménager la place nécessaire pour les charnières entre panneaux. Les charnières peuvent cependant être déportées, selon des méthodes connues, en arrière des panneaux par rapport à la surface réfléchissante.

Avantageusement, au moins un des dispositifs d'inclinaison comporte un moteur électrique.

De manière préférentielle, l'unité de commande électronique est reliée à une interface utilisateur d'un poste de commande du véhicule.

Quelques buts, caractéristiques et avantages de l'invention apparaîtront à la lecture de la description suivante, donnée uniquement à titre d'exemple non limitatif, et faite en référence aux dessins annexés sur lesquels :
La figure 1 illustre un schéma simplifié en coupe, d'un dispositif rétroviseur selon un mode de réalisation de l'invention ;
La figure 2 illustre schématiquement en vue frontale, différentes zone réfléchissantes d'un dispositif rétroviseur selon un mode de réalisation de l'invention, de manière à permettre de situer ces zones réfléchissantes par rapport à l'architecture du dispositif rétroviseur ;
La figure 3 est une vue schématique, d'une portion de mécanisme contribuant à la cinématique d'un dispositif rétroviseur selon un mode de réalisation de l'invention;
La figure 4 est une vue schématique en coupe, de la portion de mécanisme illustrée en figure 3;
La figure 5 est une vue simplifiée, de face d'un groupe de panneaux appartenant à un dispositif rétroviseur selon l'invention;
Les figures 6a et 6b illustrent en coupe, des exemples de profils de glissière pouvant être utilisés dans un dispositif rétroviseur selon l'invention.

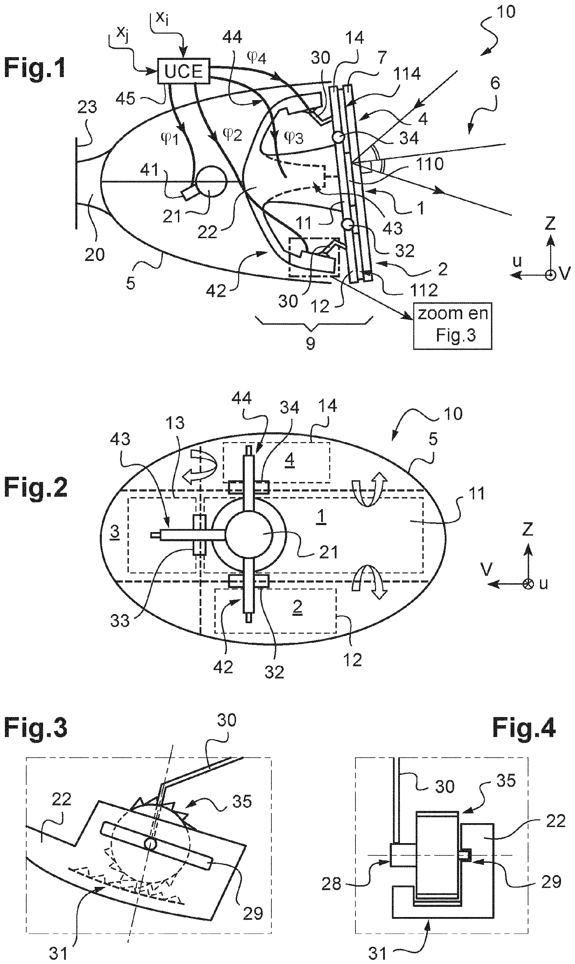

Pour revenir à la figure 1, un véhicule est équipé d'un dispositif rétroviseur 10 selon l'invention, repéré dans un système d'axe u, v, z.

Lorsque le dispositif rétroviseur est assemblé sur un véhicule automobile, avantageusement l'axe u, horizontal, correspond sensiblement à une direction usuelle d'avancement du véhicule, l'axe v est orienté suivant un axe horizontal transversal au véhicule, et l'axe z est vertical et dirigé vers le haut.

Le dispositif rétroviseur 10 est conçu pour être assemblé sur une structure de caisse 23 du véhicule par l'intermédiaire d'un support 20, reliant le rétroviseur et la structure de caisse du véhicule. Le dispositif rétroviseur 10 comprend un dispositif miroir 9 comportant une ou plusieurs surfaces réfléchissantes. Au moins une normale 6 d'une portion plane de surface réfléchissante est dirigée vers l'arrière du véhicule, de manière à permettre au conducteur de regarder, par réflexion, vers l'arrière du véhicule.

Tel qu'illustré sur la figure 1, le dispositif rétroviseur 10 comprend ici un bâti 22 qui est mobile, autour d'une rotule 21, par rapport à une base du support 20, base qui reste fixe par rapport à la structure de caisse 23.

Dans l'exemple illustré, un boîtier 5 sous forme de coque creuse, contient le bâti 22, la rotule 21 et le dispositif miroir 9 pour les protéger notamment des intempéries et des agressions extérieures. Le dispositif miroir 9 masque visuellement le bâti 22 vis-à-vis de l'extérieur du boîtier 5.

Le dispositif miroir 9 comprend une surface réfléchissante continue et flexible 7, dont la face réfléchissante est tournée au moins partiellement vers le conducteur du véhicule, et au moins partiellement vers l'arrière du véhicule.

La surface réfléchissante 7 comprend plusieurs portions de surface réfléchissantes 1, 2, 3, 4, dont les orientations relativement les unes aux autres peuvent être modifiées. Toutes ces portions de surfaces réfléchissantes sont visibles par exemple sur la figure 2, une partie d'entre elles est visible sur la figure 1.

On retrouve sur la figure 2 des éléments communs à la figure 1, les mêmes éléments étant désignés par les mêmes références. Une partie seulement des éléments constitutifs du dispositif rétroviseur 10 est représentée sur la figure 2.

La surface réfléchissante 7 est conçue pour pouvoir être incurvée le long de bandes frontières séparant les différentes portions 1, 2, 3, 4 de la surface réfléchissante . Au moins une portion centrale de chacune des portions 1, 2, 3, 4 est conçue pour rester sensiblement plane.

Selon une variante de réalisation, au moins une portion centrale plane peut être remplacée par une portion centrale de courbure figée et à symétrie axiale, par exemple si certaines portions de surface réfléchissante sont prévues pour réfléchir une image condensée sur une surface réduite.

On distingue sur les figures 1 et 2, une première portion de surface réfléchissante 1 disposée de manière sensiblement centrale par rapport à la surface flexible 7, une deuxième portion de surface réfléchissante 2 longeant un bord inférieur de la première portion de surface réfléchissante 1, une troisième portion 3 de surface réfléchissante disposée sur un bord latéral du rétroviseur 10 et longeant verticalement la première portion de surface réfléchissante 1. Dans le mode de réalisation illustré, une quatrième portion de surface réfléchissante 4 longe un bord supérieur de la première portion de surface réfléchissante 1.

La troisième portion de surface réfléchissante 3 est visible uniquement sur la figure 2.

Pour revenir à la figure 1, chacune des portions de surface réfléchissante 1, 2, 4 (et même la portion 3 non visible sur la figure 1) est soutenue par un panneau mobile articulé, respectivement ici 11, 12, 14 (et 13). Chaque panneau mobile est relié à la portion de surface réfléchissante de manière à pouvoir imposer la direction de réflexion optique d'au moins une portion centrale de la portion de surface réfléchissante.

Ainsi la première portion 1 de surface réfléchissante est soutenue par un premier panneau 11, désigné ici comme "panneau central", et qui dans l'exemple illustré, est fixe par rapport au bâti 22. Dans certains modes de réalisation, le panneau central 11 peut même être monobloc avec le bâti 22. Dans d'autres modes de réalisation encore, le panneau central peut être mobile par rapport au bâti 22.

Selon un mode de réalisation, la première portion de surface réfléchissante peut être collée à une portion de surface du panneau central, par exemple au niveau d'une zone de collage 110.

La deuxième portion 2 de surface réfléchissante est soutenue par un premier panneau articulé 12, qui est articulé par rapport au panneau central 11, autour d'une charnière 32. Dans l'exemple illustré, la charnière 32 est parallèle à un axe sensiblement horizontal, mais d'autres directions sont envisageables pour une charnière séparant par exemple deux panneaux disposés l'un au dessus de l'autre.

La quatrième portion 4 de surface réfléchissante est soutenue par un troisième panneau articulé 14, qui est articulé par rapport au panneau central 11 autour d'une charnière 34, qui est ici de direction sensiblement horizontale, mais qui pourrait être inclinée par rapport à l'horizontale.

On peut voir sur la figure 2 que la troisième portion 3 de surface réfléchissante est soutenue par un deuxième panneau articulé 13, rendu mobile par rapport au panneau 11 à l'aide d'une charnière 33 dont l'axe de rotation se trouve dans un plan sensiblement vertical. D'autres directions de charnière sont bien sûr envisageables pour articuler entre eux deux panneaux situés côte à côte et à même hauteur.

Pour revenir à la figure 1, l'inclinaison des panneaux articulés, 12, 13, 14 par rapport au panneau central 11, est imposé par une suite de dispositifs d'inclinaisons pilotés, respectivement 42, 43, 44.

Le bâti 22 comporte ici une base orientable par rapport à la structure de caisse 23 à l'aide d'une rotule 21. Le bâti 22 s'étend à partir de la base orientable par une suite de pattes, soit ici une patte pointant vers l'arrière de chacun des panneaux articulés 12, 13, 14, pour soutenir un des dispositifs d'inclinaison pilotés respectivement 42, 43, 44 dédié audit panneau.

L'inclinaison de la base orientable du bâti 22 autour de la rotule 21 peut être par exemple imposée par un premier dispositif d'inclinaison piloté 41, comprenant par exemple un système motorisé configuré pour orienter la rotule de manière variable suivant différentes directions d'un angle solide.

Chaque dispositif d'inclinaison piloté 42, 43, 44 d'un des panneaux articulés permet ici de faire varier une distance entre une zone d'appui dédiée, ménagée sur le bâti 22 -ici une zone généralement située à l'extrémité d'une des pattes du bâti 22 , et un point du panneau articulé associé, situé à l'arrière du panneau articulé -i.e. à l'arrière par rapport à la surface réfléchissante 7-.

Dans le mode de réalisation illustré sur les figures 1, 3, 4 chacun des dispositifs d'inclinaison piloté 42, 43, 44, comprend une biellette 30 reliant l'arrière du panneau articulé à une roue dentée 35, la roue dentée 35 se déplaçant sur une crémaillère 31 du bâti 22. Un rail de maintien 29 ménagé sur le bâti 22 peut permettre de maintenir la roue dentée 35 plaquée contre la crémaillère 31.

Des vues plus rapprochées du principe de fonctionnement des dispositifs d'inclinaison pilotés, au niveau de l'extrémité liée au bâti des biellettes 30, sont illustrées en figures 3 et 4.

On retrouve sur les figures 3 et 4 des références communes à la figure 1, les mêmes éléments étant désignés par les mêmes références.

La roue dentée 35 peut être mue par un moteur, par exemple un moteur électrique 28 schématisé sur la figure 4.

Le moteur 28 est piloté par une unité de commande électronique ("UCE") référencée 45 sur la figure 1. L'unité de commande électronique 45, en fonction de données xi, xj, xk... issues de différents capteurs appartenant au véhicule (capteurs non représentés), calcule par exemple des angles souhaités ϕ₂, ϕ₃, ϕ₄, d'inclinaison relatives des différentes panneaux articulés 12, 13, 14 par rapport au panneau central 11, et un angle souhaité ϕ₁ pour le panneau central 11. L'UCE 45 envoie une commande de déplacement adaptée pour obtenir chacun de ces angles, par exemple une commande de déplacement linéaire, aux différents moteurs 28, ainsi qu'au dispositif d'inclinaison piloté du panneau 11.

Les consignes ϕ₁, ϕ₂, ϕ₃, ϕ₄, permettent de placer les panneaux articulés dans une position adéquate pour que chacune des portions de surface réfléchissante 2, 3, 4 se place à un angle adéquat par rapport à la portion de surface réfléchissante 1, et que la surface réfléchissante 1 se place à une orientation adéquate par rapport aux yeux du conducteur et en fonction de paramètres de roulage instantanés du véhicule reflétés par les données xi, xj, xk... issues des différents capteurs.

Ainsi en fonction du contexte dans lequel évolue le véhicule, ainsi que des besoins instantanés du conducteur du véhicule, l'unité de commande électronique 45 pilote la position des panneaux 11, 12, 13, 14 pour imposer une configuration adéquate à la surface réfléchissante flexible 7.

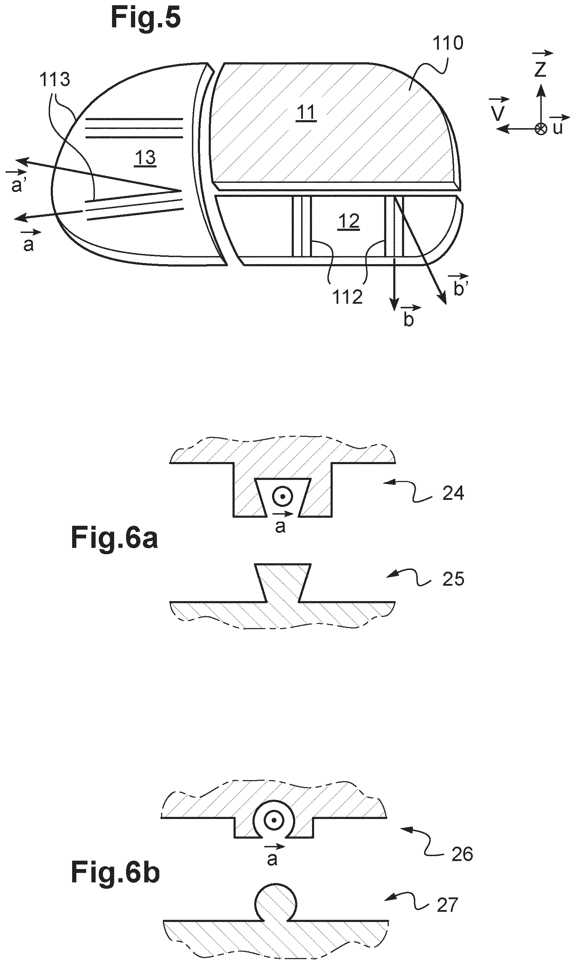

Pour permettre de fléchir la surface réfléchissante 7 sans lui imposer des rayons de courbure trop faibles dans les zones frontières le long des lignes de pliage, -des rayons trop faibles étant susceptibles d'endommager la surface-, des systèmes de glissières, référencées 112, 113, 114 sur les figures 1 et 5, relient des portion de surface réfléchissante 2, 3 (et selon les modes de réalisation, 1 et/ou 4) et leur panneau articulé associé 12, 13, (et selon les modes de réalisation, 11 et/ou 14) pour autoriser une certaine mobilité de chaque portion de surface réfléchissante par rapport au panneau qui la soutient.

La première portion de surface réfléchissante 1 peut être fixe par rapport au panneau central 11, ou peut, dans d'autres modes de réalisation, être coulissante par rapport au panneau central 11. On peut également imaginer des variantes de réalisation (non illustrées) dans lesquelles un des panneaux articulés serait collé à la portion de surface réfléchissante associée, le panneau central étant en revanche lié, par exemple par une glissière, avec la première portion de surface réfléchissante.

La figure 5 illustre une configuration possible d'un groupe de panneaux de soutien d'une surface réfléchissante d'un dispositif miroir selon l'invention, dans un mode particulier de réalisation de l'invention comportant trois panneaux seulement, soit le panneau central 11 et deux panneaux articulés 12 et 13. Dans l'exemple illustré, le panneau central 11 est collé à la première portion de surface réfléchissante (non représentée sur la figure).

Le dispositif miroir comprend ici en outre un premier panneau articulé 12 longeant le bord inférieur du panneau central 11, et comprend un deuxième panneau articulé 13 s'étendant latéralement sur la hauteur des deux panneaux précédents. La portion de surface réfléchissante soutenue par le panneau 12 est soutenue par un système de glissière 112 autorisant un déplacement selon une direction "b" qui est ici sensiblement perpendiculaire à la frontière séparant le panneau central 11 et le premier panneau articulé 12. La portion de surface réfléchissante soutenue par le panneau 13 est maintenue contre ce panneau à l'aide du système de glissière 113 autorisant une direction de déplacement suivant une direction "a" qui est sensiblement perpendiculaire à la frontière entre le panneau central 11 et le deuxième panneau articulé 13. On peut envisager des variantes de réalisation dans lesquelles les systèmes de glissières seraient orientés respectivement selon une direction b' et a' formant entre elles un angle supérieur à 90° pour deux panneaux articulés "voisins" -"voisin", i.e. pour deux panneaux articulés successifs si l'on prend en compte les panneaux articulés les uns après les autres en tournant toujours dans un même sens autour du panneau central-Des glissières ainsi écartées d'un angle supérieur à 90° peuvent permettre de rendre plus progressive la flexion de la surface réfléchissante dans la zone frontière entre les deux panneaux articulés lorsque un ou plusieurs des panneaux articulés sont inclinés en direction du conducteur afin de modifier la concavité de la surface réfléchissante 7.

Afin d'assurer la planéité d'une portion centrale de chacune des surfaces réfléchissantes, on utilise de préférence des systèmes de glissière imposant une distante constante, du moins au niveau de la glissière, entre le panneau et la surface réfléchissante. Deux glissières coplanaires sous une portion de surface réfléchissante peuvent ainsi permettre de maintenir plane une portion centrale de la portion de surface réfléchissante.

Dans l'exemple illustré en figure 5, le dispositif rétroviseur comprend le panneau central 11 soutenant la première portion de surface réfléchissante, comprend un premier panneau articulé 12 s'étendant sensiblement sur la largeur du panneau central 11, sous celui-ci, et comprend un deuxième panneau articulé 13 s'étendant latéralement sur la hauteur des deux panneaux précédents.

Il est ainsi possible de disposer d'une surface de réflexion principale de direction sensiblement constante, d'une surface à adaptation dynamique de direction latéralement par rapport au véhicule, par exemple an cas de détection de dépassement par un autre véhicule, et d'une surface à adaptation dynamique de direction suivant la hauteur du véhicule, par exemple pour des manœuvres de stationnement en présence de trottoirs et/ou de plots au sol. Cette dernière portion de surface peut se situer au dessus de la portion réfléchissante principale.

Les figures 6a et 6b illustrent des profils de glissières, la glissière étant représentée en coupe transversale, en configuration éclatée.

On peut utiliser par exemple, entre un panneau articulé et panneau et la portion de surface réfléchissante associée, des systèmes de glissière tels qu'illustrés en figure 6a et 6b.

On peut par exemple utiliser un profil en queue d'aronde extrudée tel qu'illustré sur la figure 6a (montrant une glissière non assemblée vue ici en section droite). Un relief du type de relief 24 peut être ménagé sur un panneau (un panneau central ou un panneau articulé) et une glissière complémentaire similaire au relief 25 illustré, cette glissière 25 étant fixée ou intégrée à l'arrière de la portion de surface réfléchissante associée.

La figure 6b illustre un autre exemple de profil de glissière comportant par exemple un relief femelle 26 au niveau du panneau articulé et un relief complémentaire mâle 27 que l'on peut venir glisser ou encliqueter dans le relief 26, le profil 27 étant fixé ou intégré à l'arrière de la portion de surface réfléchissante associée au panneau. Les dispositions mâle-femelle peuvent bien sûr être permutées.

La variante de la figure 6a permet une rétention solide de la portion de surface réfléchissante contre le panneau, et une bonne fiabilité du maintien à distance constante de la portion de la surface réfléchissante par rapport au panneau.

La variante de la figure 6b permet en revanche de faciliter l'assemblage et le désassemblage de la portion de surface réfléchissante sur le panneau en jouant sur l'élasticité des constituants de la glissière.

L'invention ne se limite pas aux exemples de réalisation décrit, et peut se décliner en de nombreuses variantes.

Le dispositif rétroviseur peut être adapté sur un véhicule à quatre roues, à deux roues, un gyropode, automobile ou à pédalage assisté, et plus généralement à tout véhicule équipé de capteurs permettant de discriminer entre différents mode de roulage.

Le dispositif rétroviseur peut être adapté aux camions à 4 roues ou plus, aux autobus, plus généralement même aux véhicules multicorps, aux engins de chantier, ou encore, de manière non limitative, aux machines agricoles.

Le dispositif peut être intégré à un casque.

Le panneau central peut être entouré totalement ou partiellement par les panneaux articulés.

L'assemblage de panneaux peut former une surface de contour convexe, ou peut présenter des concavités, i.e. des "découpes" au niveau de portions angulaires séparant deux panneaux voisins. Les panneaux peuvent former des surfaces pleines, ou être ajourés pour alléger le dispositif, voire pour placer des détecteurs de lumière derrière les panneaux -par exemple afin d'estimer une luminosité incidente reçue sur la portion de surface réfléchissante associée-.

Le bâti soutenant le système de panneaux et les dispositifs d'inclinaisons peut présenter de nombreuses géométries distinctes.

Les panneaux peuvent être articulés les uns par rapport aux autres autrement qu'au moyen de charnières, les dispositifs d'inclinaisons peuvent par exemple être conçus pour autoriser des variations d'écartement entre deux panneaux voisins.

Le dispositif rétroviseur selon l'invention permet d'optimiser simultanément les orientations de plusieurs portions réfléchissantes d'un rétroviseur, de manière à minimiser le nombre et l'amplitude des angles morts restants qui pourraient empêcher le conducteur de voir par réflexion, un évènement survenant derrière lui. Le dispositif rétroviseur selon l'invention permet de conserver une surface réfléchissante continue, esthétique et simple à nettoyer.

Grâce à la démultiplications des portions des surfaces réfléchissantes autour de la portion réfléchissante principale "centrale", il est possible de démultiplier de manière dynamique les angles de vision disponibles pour le conducteur du véhicule, et possible dans certains modes de réalisation, d'offrir sur le même rétroviseur un ou plusieurs angles de vision disponible pour une personne assise à côté du conducteur.

Le recours à une surface réfléchissante continue permet de rendre plus progressives les variations apparentes de luminosité du rétroviseur en fonction de l'orientation de chaque portion de surface réfléchissante.

La continuité de la surface réfléchissante permet en outre, par moment, de placer plusieurs portions de surface réfléchissante dans un même plan, et de bénéficier alors temporairement, pour la direction d'observation concernée, d'une surface d'observation élargie.

Le dispositif rétroviseur selon l'invention améliore à la fois le confort de conduite du conducteur et la sécurité des occupants du véhicule.

## Revendications

1. Dispositif rétroviseur (10) pour véhicule, comprenant
- Un dispositif miroir (9) conçu pour permettre au conducteur du véhicule de regarder, par réflexion, dans au moins une direction dirigée vers l'arrière et l'extérieur du véhicule,
- Un support (20), configuré pour fixer le dispositif miroir à une structure de caisse du véhicule,
le dispositif miroir (9) comportant au moins une première portion de surface réfléchissante (1), et comportant une deuxième portion de surface réfléchissante (2) orientable par rapport à la première portion de surface réfléchissante (1), la première et la deuxième portions de surface réfléchissante étant configurées pour permettre au conducteur du véhicule de regarder, par réflexion respectivement sur la première portion de surface réfléchissante (1) et sur la deuxième portion de surface réfléchissante (2), respectivement dans une première direction par rapport au véhicule, et dans une deuxième direction orientable par rapport à la première direction,**caractérisé en ce que** la première portion de surface réfléchissante (1) et la deuxième portion de surface réfléchissante (2) font partie d'une même surface réfléchissante continue flexible (7), et **en ce que** le dispositif miroir (9) comporte au moins un premier dispositif d'inclinaison piloté (41), configuré pour faire varier l'inclinaison de la première surface réfléchissante (1) par rapport à la structure de caisse (23) du véhicule pendant le roulage du véhicule, et le dispositif miroir (9) comporte au moins un deuxième dispositif d'inclinaison piloté (42), configuré pour faire varier l'inclinaison de la deuxième portion de surface réfléchissante (2) par rapport à la première portion de surface réfléchissante (1) pendant le roulage du véhicule.

2. Dispositif rétroviseur selon la revendication précédente, dans lequel la surface réfléchissante (7) comporte en outre une troisième portion de surface réfléchissante (3) et le dispositif miroir (9) comprend au moins un troisième dispositif d'inclinaison piloté (43), le troisième dispositif d'inclinaison piloté étant actionnable indépendamment du premier (41) et du deuxième (42) dispositif d'inclinaison piloté, et étant configuré pour faire varier l'inclinaison de la troisième portion de surface réfléchissante (3) par rapport à la première portion de surface réfléchissante (1) et par rapport à la deuxième portion de surface réfléchissante (2) pendant le roulage du véhicule.

3. Dispositif rétroviseur selon l'une des revendications 1 ou 2, dans lequel le dispositif miroir (9) comprend un groupe de panneaux support (11, 12, 13, 14), comprenant un panneau central (11) et une suite d'au moins un panneau articulé (12, 13, 14), ledit panneau articulé ou lesdits panneaux articulés étant reliés chacun par une liaison charnière (32, 33, 34) avec le panneau central (11), le panneau central (11) et chacun des panneaux articulés (12, 13, 14) étant lié chacun à au moins une parmi les portions de surfaces réfléchissantes (1, 2, 3, 4), de manière à imposer l'orientation de ladite portion de surface réfléchissante.

4. Dispositif rétroviseur selon la revendication 3, la surface réfléchissante flexible (7) comprenant une première portion (1) de surface réfléchissante s'étendant devant le panneau central (11), assemblée au panneau central (11) de manière à rester au moins localement parallèle au panneau central (11), et comprenant au moins une deuxième portion de surface réfléchissante (2) s'étendant devant un panneau articulé (12), la deuxième portion de surface réfléchissante (2) étant reliée par une glissière (112) à ce panneau articulé, et étant configurée pour coulisser par rapport au panneau articulé (12) le long de cette glissière (112) lorsque le deuxième dispositif d'inclinaison piloté (42) fait varier l'inclinaison entre le panneau articulé (12) et le panneau central (11).

5. Dispositif rétroviseur selon la revendication 4, dans lequel la surface réfléchissante flexible (7) comprend une troisième portion (3) de surface réfléchissante reliée par au moins une glissière (113), à au moins un deuxième panneau articulé (13), le deuxième panneau articulé (13) étant configuré pour être inclinable par rapport au panneau central (11).

6. Dispositif rétroviseur selon la revendication 5, dans lequel le deuxième panneau articulé (13) comporte un bord qui longe à la fois un bord du premier panneau articulé (12) et un bord du panneau central (11).

7. Dispositif rétroviseur selon l'une quelconque des revendications 3 à 6, comportant un bâti (22) supportant le panneau central (11) et supportant au moins le deuxième dispositif d'inclinaison piloté (42).

8. Dispositif rétroviseur selon la revendication 7, dans lequel au moins un des dispositifs d'inclinaison pilotés (41, 42, 43, 44) comporte une biellette (30) d'actionnement, une première extrémité de la biellette d'actionnement étant mobile, reliée par un rail au bâti (22), la première extrémité de la biellette étant mue de manière pilotée par rapport au bâti (22), et une deuxième extrémité de la biellette (30) étant reliée au panneau associé par une liaison de type rotule, de type pivot ou de type pivot glissant.

9. Dispositif selon la revendication 8, dans lequel le bâti (22) comporte une base assemblée sur une liaison rotule pour permettre de mouvoir le bâti par rapport à la structure de caisse (23) du véhicule, et le bâti (22) comporte une suite de pattes s'étendant à partir de ladite base en direction de chacun des panneaux articulés.

10. Dispositif rétroviseur selon l'une quelconque des revendications précédentes, comportant en outre une unité de commande électronique (45) configuré pour commander les dispositifs d'inclinaison pilotés (41, 42, 43, 44) de manière à imposer au moins deux positions géométriques relatives différentes de la deuxième portion de surface réfléchissante (2) par rapport à la première portion de surface réfléchissante (1), en fonction d'au moins deux conditions différentes de roulage du véhicule.

## Patentansprüche

1. Rückspiegelvorrichtung (10) für ein Fahrzeug, welche umfasst:
- eine Spiegelvorrichtung (9), die dafür auslegt ist, dem Fahrer des Fahrzeugs zu ermöglichen, durch Reflexion in wenigstens eine Richtung zu blicken, die nach hinten und nach außerhalb des Fahrzeugs gerichtet ist,
- eine Halterung (20), die dafür ausgelegt ist, die Spiegelvorrichtung an einer Karosseriestruktur des Fahrzeugs zu befestigen,
wobei die Spiegelvorrichtung (9) wenigstens einen ersten reflektierenden Oberflächenabschnitt (1) aufweist und einen zweiten reflektierenden Oberflächenabschnitt (2) aufweist, der in Bezug auf den ersten reflektierenden Oberflächenabschnitt (1) ausrichtbar ist, wobei der erste und der zweite reflektierende Oberflächenabschnitt dafür ausgelegt sind, dem Fahrer des Fahrzeugs zu ermöglichen, durch Reflexion auf dem ersten reflektierenden Oberflächenabschnitt (1) bzw. auf dem zweiten reflektierenden Oberflächenabschnitt (2) in eine erste Richtung in Bezug auf das Fahrzeug bzw. in eine zweite Richtung, die in Bezug auf die erste Richtung ausrichtbar ist, zu blicken, **dadurch gekennzeichnet, dass** der erste reflektierende Oberflächenabschnitt (1) und der zweite reflektierende Oberflächenabschnitt (2) Teile ein und derselben flexiblen durchgehenden reflektierenden Oberfläche (7) sind, und dadurch, dass die Spiegelvorrichtung (9) wenigstens eine erste gesteuerte Neigungsvorrichtung (41) aufweist, die dafür ausgelegt ist, ein Variieren der Neigung der ersten reflektierenden Oberfläche (1) in Bezug auf die Karosseriestruktur (23) des Fahrzeugs während der Fahrt des Fahrzeugs zu bewirken, und die Spiegelvorrichtung (9) wenigstens eine zweite gesteuerte Neigungsvorrichtung (42) aufweist, die dafür ausgelegt ist, ein Variieren der Neigung des zweiten reflektierenden Oberflächenabschnitts (2) in Bezug auf den ersten reflektierenden Oberflächenabschnitt (1) während der Fahrt des Fahrzeugs zu bewirken.

2. Rückspiegelvorrichtung nach dem vorhergehenden Anspruch, wobei die reflektierende Oberfläche (7) außerdem einen dritten reflektierenden Oberflächenabschnitt (3) aufweist und die Spiegelvorrichtung (9) wenigstens eine dritte gesteuerte Neigungsvorrichtung (43) umfasst, wobei die dritte gesteuerte Neigungsvorrichtung unabhängig von der ersten (41) und der zweiten (42) gesteuerten Neigungsvorrichtung betätigbar ist und dafür ausgelegt ist, ein Variieren der Neigung des dritten reflektierenden Oberflächenabschnitts (3) in Bezug auf den ersten reflektierenden Oberflächenabschnitt (1) und in Bezug auf den zweiten reflektierenden Oberflächenabschnitt (2) während der Fahrt des Fahrzeugs zu bewirken.

3. Rückspiegelvorrichtung nach einem der Ansprüche 1 oder 2, wobei die Spiegelvorrichtung (9) eine Gruppe von Trägerplatten (11, 12, 13, 14) umfasst, die eine zentrale Platte (11) und eine Folge von wenigstens einer angelenkten Platte (12, 13, 14) umfasst, wobei die angelenkte Platte oder die angelenkten Platten jeweils durch eine Scharnierverbindung (32, 33, 34) mit der zentralen Platte (11) verbunden sind, wobei die zentrale Platte (11) und jede der angelenkten Platten (12, 13, 14) jeweils mit wenigstens einem der reflektierenden Oberflächenabschnitte (1, 2, 3, 4) verbunden sind, um die Ausrichtung dieses reflektierenden Oberflächenabschnitts festzulegen.

4. Rückspiegelvorrichtung nach Anspruch 3, wobei die flexible reflektierende Oberfläche (7) einen ersten reflektierenden Oberflächenabschnitt (1) umfasst, der sich vor der zentralen Platte (11) erstreckt und derart an der zentralen Platte (11) angebracht ist, dass er wenigstens lokal parallel zu der zentralen Platte (11) bleibt, und wenigstens einen zweiten reflektierenden Oberflächenabschnitt (2) umfasst, der sich vor einer angelenkten Platte (12) erstreckt, wobei der zweite reflektierende Oberflächenabschnitt (2) durch eine Gleitschiene (112) mit dieser angelenkten Platte verbunden ist und dafür ausgelegt ist, in Bezug auf die angelenkte Platte (12) entlang dieser Gleitschiene (112) zu gleiten, wenn die zweite gesteuerte Neigungsvorrichtung (42) ein Variieren der Neigung zwischen der angelenkten Platte (12) und der zentralen Platte (11) bewirkt.

5. Rückspiegelvorrichtung nach Anspruch 4, wobei die flexible reflektierende Oberfläche (7) einen dritten reflektierenden Oberflächenabschnitt (3) umfasst, der durch wenigstens eine Gleitschiene (113) mit wenigstens einer zweiten angelenkten Platte (13) verbunden ist, wobei die zweite angelenkte Platte (13) dafür ausgelegt ist, in Bezug auf die zentrale Platte (11) neigbar zu sein.

6. Rückspiegelvorrichtung nach Anspruch 5, wobei die zweite angelenkte Platte (13) einen Rand aufweist, der gleichzeitig entlang eines Randes der ersten angelenkten Platte (12) und eines Randes der zentralen Platte (11) verläuft.

7. Rückspiegelvorrichtung nach einem der Ansprüche 3 bis 6, welche ein Gestell (22) aufweist, das die zentrale Platte (11) stützt und wenigstens die zweite gesteuerte Neigungsvorrichtung (42) stützt.

8. Rückspiegelvorrichtung nach Anspruch 7, wobei wenigstens eine der gesteuerten Neigungsvorrichtungen (41, 42, 43, 44) einen Betätigungsarm (30) aufweist, wobei ein erstes Ende des Betätigungsarmes beweglich ist und über eine Schiene mit dem Gestell (22) verbunden ist, wobei das erste Ende des Armes gesteuert in Bezug auf das Gestell (22) bewegt wird und wobei ein zweites Ende des Armes (30) mit der zugeordneten Platte über eine Verbindung vom Typ eines Kugelgelenks, vom Typ eines Drehzapfens oder vom Typ einer Gleit-Schwenk-Verbindung verbunden ist.

9. Vorrichtung nach Anspruch 8, wobei das Gestell (22) ein Unterteil aufweist, das auf einer Kugelgelenkverbindung angebracht ist, um zu ermöglichen, das Gestell in Bezug auf die Karosseriestruktur (23) des Fahrzeugs zu bewegen, und wobei das Gestell (22) eine Reihe von Laschen aufweist, die sich von dem Unterteil aus in Richtung der einzelnen angelenkten Platten erstrecken.

10. Rückspiegelvorrichtung nach einem der vorhergehenden Ansprüche, welche außerdem eine elektronische Steuereinheit (45) aufweist, welche dafür ausgelegt ist, die gesteuerten Neigungsvorrichtungen (41, 42, 43, 44) derart zu steuern, dass wenigstens zwei verschiedene relative geometrische Positionen des zweiten reflektierenden Oberflächenabschnitts (2) in Bezug auf der ersten reflektierenden Oberflächenabschnitt (1) erzeugt werden, in Abhängigkeit von wenigstens zwei verschiedenen Fahrbedingungen des Fahrzeugs.

## Claims

1. Rear-view mirror device (10) for a vehicle, comprising
- a mirror device (9) designed to allow the vehicle driver to look, by reflection, in at least one direction directed towards the rear and outside the vehicle,
- a support (20) configured to fasten the mirror device to a vehicle body structure,
the mirror device (9) having at least one first reflective-surface portion (1), and having a second reflective-surface portion (2) that is orientable with respect to the first reflective-surface portion (1), the first and second reflective-surface portions being configured to allow the vehicle driver to look, by reflection at the first reflective-surface portion (1) and at the second reflective-surface portion (2), respectively, in a first direction with respect to the vehicle and in a second direction that is orientable with respect to the first direction, **characterized in that** the first reflective-surface portion (1) and the second reflective-surface portion (2) are part of one and the same flexible continuous reflective surface (7), and **in that** the mirror device (9) has at least one first controlled inclination device (41) that is configured to vary the inclination of the first reflective surface (1) with respect to the body structure (23) of the vehicle while the vehicle is being driven, and the mirror device (9) has at least one second controlled inclination device (42) that is configured to vary the inclination of the second reflective-surface portion (2) with respect to the first reflective-surface portion (1) while the vehicle is being driven.

2. Rear-view mirror device according to the preceding claim, wherein the reflective surface (7) also has a third reflective-surface portion (3) and the mirror device (9) also comprises at least one third controlled inclination device (43), the third controlled inclination device being actuable independently of the first controlled inclination device (41) and the second controlled inclination device (42), and being configured to vary the inclination of the third reflective-surface portion (3) with respect to the first reflective-surface portion (1) and with respect to the second reflective-surface portion (2) while the vehicle is being driven.

3. Rear-view mirror device according to either of Claims 1 and 2, wherein the mirror device (9) comprises a group of support panels (11, 12, 13, 14), comprising a central panel (11) and a succession of at least one articulated panel (12, 13, 14), said articulated panel(s) each being connected to the central panel (11) by a hinge connection (32, 33, 34), the central panel (11) and each of the articulated panels (12, 13, 14) each being connected to at least one of the reflective-surface portions (1, 2, 3, 4) so as to set the orientation of said reflective-surface portion.

4. Rear-view mirror device according to Claim 3, the flexible reflective surface (7) comprising a first reflective-surface portion (1) that extends in front of the central panel (11) and is joined to the central panel (11) so as to remain at least locally parallel to the central panel (11), and comprising at least one second reflective-surface portion (2) that extends in front of an articulated panel (12), the second reflective-surface portion (2) being connected to this articulated panel by a slideway (112) and being configured to slide along this slideway (112) with respect to the articulated panel (12) when the second controlled inclination device (42) varies the inclination between the articulated panel (12) and the central panel (11).

5. Rear-view mirror device according to Claim 4, wherein the flexible reflective surface (7) comprises a third reflective-surface portion (3) connected by at least one slideway (113) to at least one second articulated panel (13), the second articulated panel (13) being configured to be inclinable with respect to the central panel (11).

6. Rear-view mirror device according to Claim 5, wherein the second articulated panel (13) has an edge that borders both an edge of the first articulated panel (12) and an edge of the central panel (11).

7. Rear-view mirror device according to any one of Claims 3 to 6, having a frame (22) supporting the central panel (11) and supporting at least the second controlled inclination device (42).

8. Rear-view mirror device according to Claim 7, wherein at least one of the controlled inclination devices (41, 42, 43, 44) has an actuating link rod (30), a first end of the actuating link rod being movable and connected to the frame (22) by a rail, the first end of the link rod being moved in a controlled manner with respect to the frame (22), and a second end of the link rod (30) being connected to the associated panel by a connection of the ball-joint type, of the pivot type or of the sliding pivot type.

9. Device according to Claim 8, wherein the frame (22) has a base fitted on a ball-joint connection for making it possible to move the frame with respect to the body structure (23) of the vehicle, and the frame (22) has a succession of lugs extending from said base in the direction of each of the articulated panels.

10. Rear-view mirror device according to any one of the preceding claims, also having an electronic control unit (45) configured to operate the controlled inclination devices (41, 42, 43, 44) so as to set at least two different relative geometric positions of the second reflective-surface portion (2) with respect to the first reflective-surface portion (1), depending on at least two different driving conditions of the vehicle.
